# EUROPÄISCHE PATENTSCHRIFT

(11) **EP 1 298 357 B1**
(45) Veröffentlichungstag und Bekanntmachung des Hinweises auf die Patenterteilung: **16.08.2006**
(21) Anmeldenummer: 02021161.1
(22) Anmeldetag: 24.09.2002
(51) Int. Cl.: F16H 61/02

(54) **Hydraulische Getriebesteuerung**
Hydraulic transmission control
Commande hydraulique de transmission

(30) Priorität: 27.09.2001 DE 10147844
(43) Veröffentlichungstag der Anmeldung: 02.04.2003
(73) Patentinhaber: ZF FRIEDRICHSHAFEN Aktiengesellschaft, 88038 Friedrichshafen (DE)
(72) Erfinder: Riedhammer, Michael, 88697 Bermatingen (DE)
(74) Vertreter: Zietlow, Karl-Peter

(56) Entgegenhaltungen:
- WO-A-97/21942

## Beschreibung

Die Erfindung betrifft eine hydraulische Getriebesteuerung mit den Merkmalen des Oberbegriffs des Anspruchs 1.

Aus der EP 0 866 928, welches die Merkmale des Oberbegriffs des Anspruchs 1 zeigt, ist eine Getriebesteuerung bekannt für Syncro-Shuttle Getriebe oder Lastschaltgetriebe mit Schaltelementen für Vorwärts- oder Rückwärtsfahrt, wobei Schalteinrichtungen für die Betätigung eines Schaltventils zur Fahrtrichtungswahl vorgesehen sind. Zwischen den Schaltelementen für Vorwärts- oder Rückwärtsfahrt und dem von den Schalteinrichtungen betätigbaren Schaltventil zur Fahrtrichtungswahl ist ein über eine weitere Schalteinrichtung betätigbares Steuerventil angeordnet, das Anschlußöffnungen zur Verbindung mit den Schaltelementen aufweist. Die Anschlußöffnungen sind bei einem Syncro-Shuttle Getriebe zur Sperrung des Druckmitteldurchflusses durch das Steuerventil mittels eines Absperrteils gesperrt und bei einem Lastschaltgetriebe mit einem weiteren Schaltelement verbunden. Mit dieser Getriebesteuerung kann ein gemeinsamer Steuerblock unverändert in einem Syncro-Shuttle Getriebe oder Lastschaltgetriebe eingesetzt werden, so dass zusätzliche Bauteile vermieden, Fertigungskosten gesenkt und Beschaffung und Bevorratung vereinfacht werden können.

Getriebesteuerungen für Gruppengetriebe, wie z. B. in Lastschaltgetrieben gemäß der EP 0 866 928, zur Ansteuerung von als Kupplungen ausgebildeten Schaltelementen, haben den Nachteil, dass beim Kupplungswechsel in einer Gruppe auch der Druck für die Kupplung in der anderen Gruppe beeinflußt wird. Insbesondere bei Fahrtrichtungswechseln ist dies unerwünscht.

Der vorliegenden Erfindung liegt daher die Erfindung zugrunde, eine Getriebesteuerung für Gruppengetriebe zu schaffen, mit der Druck der Kupplungen in einer Gruppe entkoppelt wird von der Ansteuerung einer Kupplung in einer anderen Gruppe.

Die Lösung erfolgt mit einer Getriebesteuerung für Gruppengetriebe mit den Merkmalen des Anspruchs 1. Vorteilhafte Ausgestaltungen der Erfindung sind in den Unteransprüchen dargestellt.

Gemäß der Erfindung ist eine Getriebesteuerung für Gruppengetriebe mit mindestens einer ersten und einer zweiten Gruppe versehen. Schaltelemente für Vorwärts- oder Rückwärtsfahrt sind mit einer Druckmittelquelle, die den Ausgangssystemdruck p-sys zur Verfügung stellt, über Verbindungsleitungen verbunden. Schalteinrichtungen sind vorgesehen für die Betätigung eines Schaltventils in den Verbindungsleitungen der ersten Gruppe zur Fahrtrichtungswahl und ein über eine weitere Schalteinrichtung betätigbares Steuerventil ist in den Verbindungsleitungen zwischen den Schaltelementen und dem Schaltventil zur Fahrtrichtungswahl angeordnet. In der Verbindungsleitung zwischen der Druckmittelquelle und dem Schaltventil ist ein zentrales Druckmodul vorgesehen, das stromabwärts in der Verbindungsleitung den modulierten Druck p-mod bereit stellt. Vor dem Schaltventil und nach dem zentralen Druckmodul zweigt von der Verbindungsleitung ein erster Ölversorgungspfad ab mit dem modulierten Druck p-mod. Eine Absperrvorrichtung im ersten Ölversorgungspfad wirkt einseitig zur zweiten Gruppe. Von der Verbindungsleitung mit dem Druck p-sys zwischen der Druckmittelquelle und dem zentralen Druckmodul zweigt ein zweiter Ölversorgungspfad ab zur zweiten Gruppe. Der erste Ölversorgungspfad mit dem modulierten Druck p-mod mündet in den zweiten Ölversorgungspfad zur zweiten Gruppe. Erfindungs-gemäß trennt die einseitig wirkende Absperrvorrichtung im ersten Ölversorgungspfad zur zweiten Gruppe den zweiten Ölversorgungspfad vom als Drucksteuerventil ausgebildeten zentralen Druckmodul, wenn in der ersten Gruppe ein Gangwechsel vollzogen wird. So ergibt sich gemäß der Erfindung der Vorteil, dass beim Kupplungswechsel in der ersten Gruppe der Druck für die Kupplung in der zweiten Gruppe nicht beeinflußt wird. Die erfindungsgemäße Getriebesteuerung für Gruppengetriebe entkoppelt den Druck der Kupplungen in der zweiten Gruppe von der Ansteuerung der Kupplung in der ersten Gruppe. Dies führt zu verbesserter Schaltqualität, die insbesondere bei Fahrtrichtungswechseln erwünscht ist.

Gemäß einer bevorzugten Ausgestaltung der Erfindung ist eine weitere einseitig wirkende Absperrvorrichtung im zweiten Ölversorgungspfad vorgesehen. Soll in der zweiten Gruppe eine Kupplung geschaltet werden, wird wiederum der zentrale Druckmodul aktiviert, wobei die weitere einseitig wirkende Absperrvorrichtung im zweiten Ölversorgungspfad verhindert, daß der Ausgangsdruck des zentralen Druckmoduls zur neuen Kupplung in der zweiten Gruppe vom Druck des zweiten Ölversorgungspfad überlagert wird, so dass sich vorteilhafterweise der Druckanstieg, wie vom zentralen Druckmodul vorgegeben, in einer in der zweiten Gruppe zu schaltenden Kupplung ergibt. So ergibt sich gemäß dieser Ausgestaltung der Erfindung der Vorteil, dass beim Kupplungswechsel in der zweiten Gruppe der Druck für die Kupplung in der zweiten Gruppe nicht vom Ausgangssystemdruck p-sys des Gruppengetriebes beeinflusst wird. Die erfindungsgemäße Getriebesteuerung für Gruppengetriebe entkoppelt so vollständig den Druck der Kupplungen in einer Gruppe von der Ansteuerung einer Kupplung in einer anderen Gruppe.

Gemäß einer weiteren bevorzugten Ausgestaltung der Erfindung ist eine Blende zum Ausgleich von Spaltleckagen mit der weiteren einseitig wirkenden Absperrvorrichtung im zweiten Ölversorgungspfad in Reihe geschaltet.

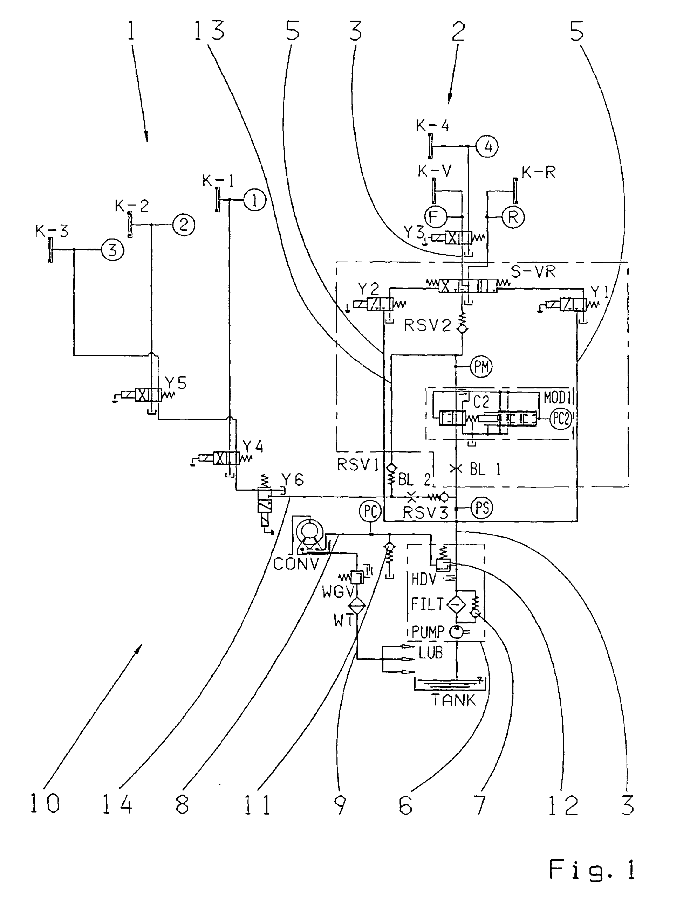

Gemäß einer weiteren bevorzugten Ausgestaltung der Erfindung ist die Blende stromabwärts der weiteren einseitig wirkenden Absperrvorrichtung angeordnet, so dass Druckschwankungen im zweiten Ölversorgungspfad von einer in der zweiten Gruppe zu schaltenden Kupplung auf die weitere einseitig wirkende Absperrvorrichtung gedämpft werden.
Weitere Vorteile und vorteilhafte Ausbildungen ergeben sich aus dem nachfolgend anhand der Zeichnung beschriebenen Ausführungsbeispiel.

Es zeigt die einzige Figur eine Prinzipdarstellung einer Getriebesteuerung gemäß der Erfindung.

Eine Getriebesteuerung 10 für ein als Vollastschaltgetriebe ausgebildetes Gruppengetriebe weist eine erste Gruppe 1 mit Schaltelementen K4 und KV, KR für Vorwärtsoder Rückwärtsfahrt und eine zweite Gruppe 2 mit Schaltelementen K1, K2 und K3 (nicht dargestellt) auf. Die Schaltelemente sind als hydraulisch betätigbare Kupplungen ausgestaltet.

Durch eine Verbindungsleitung 3 wird Druckmittel von einer Druckmittelquelle Tank, Pump mit einem Systemdruck p-sys durch ein Filter Filt gefördert. Zum Filter Filt ist ein Bypass 6 mit einer einseitig wirkenden Absperrvorrichtung 7 geschaltet. Absperrvorrichtung 7 öffnet den Bypass 6, wenn Druckanstieg vor dem Filter Filt in Verbindungsleitung 3 signalisiert, dass Filter Filt verstopft ist.

Von Verbindungsleitung 3 wird Druckmittel über ein Druckminderventil 12 zu einem Converter Conv über einen Abzweig 8 gefördert. Vom Converter Conv fließt Druckmittel über einen Wärmetauscher WT durch einen Rücklauf 9 zurück in die mit Umgebungsdruck beaufschlagte Druckmittelquelle Tank. Oberhalb eines definierten Druckniveaus im Abzweig 8 öffnet ein Absperrventil 11 und Druckmittel fließt ab in die mit Umgebungsdruck beaufschlagte Druckmittelquelle Tank.

Als elektromagnetische 3/2 Ventile ausgebildete Schalteinrichtungen Y1, Y2 für die Betätigung eines Schaltventils S-VR der ersten Gruppe 1 werden ausgehend von Verbindungsleitung 3 mit dem Systemdruck p-sys über Verbindungsleitungen 5 beaufschlagt.

Die Verbindungsleitung 3 beaufschlagt vor dem Schaltventil S-VR ein als hydraulisch geregeltes Drucksteuerventil ausgebildetes zentrales Druckmodul MOD1. Eine nach dem zentralen Druckmodul MOD1 in Reihe geschaltete, einseitig wirkende Absperrvorrichtung RSV2, wird von einer Feder gegen einen einstellbar modulierten Druck p-mod in der Verbindungsleitung 4 geschlossen gehalten. Bei einem Differenzdruck öffnet Absperrvorrichtung RSV2 die Verbindungsleitung 3 vom zentralen Druckmodul MOD1 zum Schaltventil S-VR.

Zwischen die Schaltelemente K4 und KV, KR für Vorwärts- oder Rückwärtsfahrt und das Schaltventil S-VR ist ein elektromagnetisch betätigbares 4/2 Steuerventil Y3 geschaltet.

Von der Verbindungsleitung 3 zweigt zwischen der Druckmittelquelle Tank, Pump und dem Schaltventil S-VR nach dem zentralen Druckmodul MOD1 ein erster Ölversorgungspfad 13 mit einer einseitig wirkenden Absperrvorrichtung RSV1 zur zweiten Gruppe 2 ab. Von der Verbindungsleitung 3 zweigt zwischen der Druckmittelquelle Tank, Pump und dem Schaltventil S-VR vor dem zentralen Druckmodul MOD1 ein zweiter Ölversorgungspfad 14 mit einer Blende BL 2 und einer einseitig wirkenden Absperrvorrichtung RSV3 zur zweiten Gruppe 2 ab. Der erste Ölversorgungspfad 13 mündet stromabwärts der Blende BL 2 in den zweiten Ölversorgungspfad 14 zur zweiten Gruppe 2 mit den Schaltelementen K1, K2 und K3, denen jeweils wiederum elektromagnetisch betätigbare 4/2 Steuerventil Y4, Y5 und Y6 in Reihe vor geschaltet sind.

### Wirkungsweise der Getriebesteuerung 1:

In der in der Figur dargestellten Schaltstellung der Getriebesteuerung 1 sind alle Schaltelemente der Gruppen 1, 2 des Gruppengetriebes druckfrei, d. h. die Kupplungen sind offen; es ist kein Gang eingelegt. Damit ein Gang eingelegt ist, müssen zwei Kupplungen geschlossen sein.

Schaltventil S-VR ist in neutraler Mittenstellung bei der Verbindungsleitungen F, 4 und R zu den Schaltelemente K4, KV und KR der Gruppen 2 druckfrei sind.

Absperrvorrichtung RSV1 zur zweiten Gruppe 2 ist bei einem Differenzdruck von kleiner 0,5 bar zwischen zentralen Druckmodul MOD1 und zweiter Gruppe 2 von seiner Feder im ersten Ölversorgungspfad 13 geschlossen gehalten und Absperrvorrichtung RSV3 zur zweiten Gruppe 2 ist bis zu einem Differenzdruck von 6 bar von seiner Feder im zweiten Ölversorgungspfad 14 offen gehalten. An den Absperrvorrichtungen RSV1 und RSV3 herrscht bei eingelegtem Gang weitgehend Druckgleichgewicht.

### Einlegen eines Ganges in Gruppe 1:

Wird Schalteinrichtung Y2 elektromagnetisch betätigt nach rechts verschoben, beaufschlagt Systemdruck p-sys über Verbindungsleitung 5 das Schaltventil S-VR und verschiebt es ebenfalls nach rechts. Schaltelemente K4 und KV werden so druckfrei geschaltet und Schaltelement KR über Leitung R mit dem modulierten Druck p-mod aus der Verbindungsleitung 3 beaufschlagt. Das Gruppengetriebe ist auf Rückwärtsfahrt eingestellt.

Wird Schalteinrichtung Y1 elektromagnetisch betätigt nach rechts verschoben, beaufschlagt Systemdruck p-sys über Verbindungsleitung 5 das Schaltventil S-VR und verschiebt es nach links. Schaltelement KR wird so druckfrei geschaltet. In der gezeigten Stellung beaufschlagt Steuerventil Y3 die Leitung F und damit das Schaltelement KV mit dem modulierten Druck p-mod aus der Verbindungsleitung 3. Schaltelement K4 ist druckfrei geschaltet. Das Gruppengetriebe ist auf Vorwärtsfahrt eingestellt.

Wird bei nach links verschobenem Schaltventil S-VR das Steuerventil Y3 elektromagnetisch betätigt nach rechts verschoben, beaufschlagt der modulierte Druck p-mod aus der Verbindungsleitung 3 über Leitung 4 das Schaltelement K4. Schaltelement KV wird druckfrei.

### Einlegen eines Ganges in Gruppe 2:

Wird Schalteinrichtung Y6 elektromagnetisch betätigt gegen eine Federkraft verschoben und sind Schalteinrichtungen Y4 und Y5 in den dargestellten Positionen, beaufschlagt der mit dem modulierten Druck p-mod aus dem ersten Ölversorgungspfad 13 überlagerte Systemdruck p-sys über den zweiten Ölversorgungspfad 14 das Schaltelement K3. Schaltelemente K1 und K2 bleiben druckfrei.

Werden Schalteinrichtungen Y6 und Y5 elektromagnetisch betätigt gegen ihre Federkräfte verschoben und bleibt Schalteinrichtung Y4 in der dargestellten Position, beaufschlagt der mit dem modulierten Druck p-mod aus dem ersten Ölversorgungspfad 13 überlagerte Systemdruck p-sys über den zweiten Ölversorgungspfad 14 das Schaltelement K2. Schaltelemente K1 und K3 bleiben druckfrei.

Werden Schalteinrichtungen Y6 und Y4 elektromagnetisch betätigt gegen Federkräfte verschoben und bleibt Schalteinrichtung Y5 in der dargestellten Position, beaufschlagt der mit dem modulierten Druck p-mod aus dem ersten Ölversorgungspfad 13 überlagerte Systemdruck p-sys über den zweiten Ölversorgungspfad 14 das Schaltelement K1. Schaltelemente K1 und K2 bleiben druckfrei.

Wird in der ersten Gruppe 1 ein Gangwechsel vorgenommen, verringert sich der Druck am Ausgang des zentralen Druckmoduls MOD1 sehr schnell bis auf den Befülldruck des als Kupplung ausgebildeten Schaltelements K4, KR oder KV. An der Absperrvorrichtung RSV1 im ersten Ölversorgungspfad 13 tritt in Richtung zum zentralen Druckmodul MOD1 ein großer Druckabfall auf, der die Absperrvorrichtung RSV1 geschlossen hält, so dass die Verbindung zwischen dem geschlossenen Schaltelement K1, K2 oder K3 in der zweiten Gruppe 2 und dem Ausgang des zentralen Druckmoduls MOD1 geschlossen bleibt. Der Druck in der zweiten Gruppe 2 bleibt so erhalten und das geschlossene Schaltelement K1, K2 oder K3 in der zweiten Gruppe 2 bleibt zuverlässig geschlossen. Über die im zweiten Ölversorgungspfad 14 vorgesehene Blende BL 2 werden Spaltleckagen in der zweiten Gruppe 2 ausgeglichen.

Wird in der zweiten Gruppe 2 ein Gangwechsel vorgenommen, bricht der Druck im zweiten Ölversorgungspfad 14 bis auf den Befülldruck des als Kupplung ausgebildeten Schaltelements K1, K2 oder K3 ein. Absperrvorrichtung RSV1 im ersten Ölversorgungspfad 13 öffnet sich, da nunmehr der große Druckabfall in Richtung zum zweiten Ölversorgungspfad 14 auftritt. An Absperrvorrichtung RSV3 tritt ebenfalls ein große Druckunterschied auf, der die Absperrvorrichtung RSV3 gegen seine Federvorspannkraft schließt. Der Druckanstieg für das zu schaltende Schaltelement K1, K2 oder K3 in der zweiten Gruppe 2 wird so allein über den ersten Ölversorgungspfad 13 vom zentralen Druckmodul MOD1 bestimmt und ist mit der geschlossenen Absperrvorrichtung RSV3 vom Systemdruck in der ersten Gruppe 1 zuverlässig entkoppelt.

## Patentansprüche

1. Getriebesteuerung (10) für Gruppengetriebe mit
- mindestens einer ersten und einer zweiten Gruppe (1, 2), Schaltelementen (K1 bis K4, KV, KR) für Vorwärts- oder Rückwärtsfahrt,
- Verbindungsleitungen (3, 4, F, R, 13, 14) zwischen einer Druckmittelquelle (Tank, Pump) und den Schaltelementen (K1 bis K4, KV, KR),
- Schalteinrichtungen (Y1, Y2) für die Betätigung eines Schaltventils (S-VR) in den Verbindungsleitungen (3, 4, F, R) der ersten Gruppe (1) zur Fahrtrichtungswahl und
- einem über eine weitere Schalteinrichtung betätigbaren Steuerventil (Y3) in den Verbindungsleitungen (3, 4, F) zwischen den Schaltelementen (K4, KV) und dem Schaltventil (S-VR) zur Fahrtrichtungswahl,
**dadurch gekennzeichnet, dass**
- in der Verbindungsleitung (3) zwischen der Druckmittelquelle (Tank, Pump) und dem Schaltventil (S-VR) ein zentrales Druckmodul (MOD1),
- in der Verbindungsleitung (3) zwischen der Druckmittelquelle (Tank, Pump) und dem Schaltventil (S-VR) nach dem zentralen Druckmodul (MOD1) ein erster Ölversorgungspfad (13) mit einer einseitig wirkenden Absperrvorrichtung (RSV1) zur zweiten Gruppe (2) und
- in der Verbindungsleitung (3) zwischen der Druckmittelquelle (Tank, Pump) und dem Schaltventil (S-VR) vor dem zentralen Druckmodul (MOD1) ein zweiter Ölversorgungspfad (14) zur zweiten Gruppe vorgesehen ist, wobei der erste Ölversorgungspfad (13) in den zweiten Ölversorgungspfad (14) zur zweiten Gruppe (2) mündet.

2. Getriebesteuerung (10) für Gruppengetriebe gemäß nspruch 1, **dadurch gekennzeichnet, dass** eine weitere einseitig wirkende Absperrvorrichtung (RSV3) im zweiten Ölversorgungspfad (14) vorgesehen ist.

3. Getriebesteuerung (10) für Gruppengetriebe gemäß Anspruch 1, **dadurch gekennzeichnet, dass** eine Blende (BL 2) mit der weiteren einseitig wirkenden Absperrvorrichtung (RSV3) im zweiten Ölversorgungspfad (14) in Reihe geschaltet ist.

4. Getriebesteuerung (10) für Gruppengetriebe gemäß Anspruch 3, **dadurch gekennzeichnet, dass** die Blende (BL 2) der weiteren einseitig wirkenden Absperrvorrichtung (RSV3) nach geschaltet ist.

## Claims

1. Transmission control (10) for group transmissions with
- at least one first and one second group (1, 2), shift elements (K1 to K4, KV, KR) for forward or reverse drive,
- connecting lines (3, 4, F, R, 13, 14) between a pressure medium source (Tank, Pump) and the shift elements (K1 to K4, KV, KR),
- shift devices (Y1, Y2) for operating a shift valve (S-VR) in the connecting lines (3, 4, F, R) of the first group (1) for selecting the direction of travel and
- a control valve (Y3), which can be operated via a further shift device, in the connecting lines (3, 4, F) between the shift elements (K4, KV) and the shift valve (S-VR) for selecting the direction of travel,
**characterised in that**
- a central pressure module (MOD1) is provided in the connecting line (3) between the pressure medium source (Tank, Pump) and the shift valve (S-VR),
- a first oil supply path (13) with a single-direction shut-off device (RSV1) for the second group (2) is provided in the connecting line (3) between the pressure medium source (Tank, Pump) and the shift valve (S-VR) after the central pressure module (MOD1) and
- a second oil supply path (14) for the second group is provided in the connecting line (3) between the pressure medium source (Tank, Pump) and the shift valve (S-VR) before the central pressure module (MOD1), wherein the first oil supply path (13) leads into the second oil supply path (14) to the second group (2).

2. Transmission control (10) for group transmissions according to Claim 1, **characterised in that** a further single-direction shut-off device (RSV3) is provided in the second oil supply path (14).

3. Transmission control (10) for group transmissions according to Claim 1, **characterised in that** a diaphragm (BL 2) is connected in series with the further single-direction shut-off device (RSV3) in the second oil supply path (14).

4. Transmission control (10) for group transmissions according to Claim 3, **characterised in that** the diaphragm (BL 2) is connected after the further single-direction shut-off device (RSV3).

## Revendications

1. Boîtier de commande d'une boîte de vitesses (10) pour une boîte de gammes dotée d'au moins une première et une deuxième gamme (1, 2), d'éléments de commande (K1 - K4, KV, KR) pour la marche avant et la marche arrière, d'éléments de liaison (3, 4, F, R, 13, 14) entre une source du liquide de pression (réservoir, pompe) et d'éléments de commande (K1 - K4, KV, KR), de dispositifs de commande (Y1, Y2) pour l'actionnement d'une soupape de commande (S-VR) dans les conduits de raccordement (3, 4, F, R) de la première gamme (1) pour la sélection du sens de marche, et d'une valve de commande (Y3) qui peut être actionnée à l'aide d'un autre dispositif de commande (Y3) dans les conduits de raccordement (3,4, F) entre les éléments de commande (K4, KV) et la soupape de commande (S-VR) pour la sélection du sens de marche, **caractérisé en ce que** dans le conduit de raccordement (3) entre la source du liquide de pression (réservoir, pompe) et la soupape de commande (S-VR) est prévu un module de pression central (MOD1), dans le conduit de raccordement (3) entre la source du liquide de pression (réservoir, pompe) et la soupape de commande (S-VR) en aval du module de pression central (MOD1) est prévu un premier chemin d'alimentation en huile (13) avec un premier dispositif de verrouillage à simple effet (RSV1) vers la deuxième gamme (2) et dans le conduit de raccordement (3) entre la source du liquide de pression (réservoir, pompe) et la soupape de commande (S-VR) en amont du module de pression central (MOD1) est prévu un deuxième chemin d'alimentation en huile (14) vers la deuxième gamme, sachant que le premier chemin d'alimentation en huile (13) débouche dans le deuxième chemin d'alimentation en huile (14) vers la deuxième gamme (2).

2. Boîtier de commande d'une boîte de vitesses (10) pour une boîte de gammes selon la revendication 1, **caractérisé en ce que** dans le deuxième chemin d'alimentation en huile (14) est prévu un autre dispositif de verrouillage à simple effet (RSV3).

3. Boîtier de commande d'une boîte de vitesses (10) pour une boîte de gammes selon la revendication 1, **caractérisé en ce qu'**un diaphragme (BL2) et l'autre dispositif de verrouillage à simple effet (RSV3) sont disposés en ligne dans le deuxième chemin d'alimentation en huile (14).

4. Boîtier de commande d'une boîte de vitesses (10) pour une boîte de gammes selon la revendication 3, **caractérisé en ce que** le diaphragme (BL2) est disposé en aval de l'autre dispositif de verrouillage à simple effet (RSV3).
